# EUROPEAN PATENT APPLICATION

(11) **EP 2 584 012 A1**
(43) Date of publication of application: **24.04.2013**
(21) Application number: 10853263.1
(22) Date of filing: 18.06.2010
(51) Int. Cl.: C09D 11/18

(54) **WATER-BASED INK COMPOSITION FOR BALLPOINT PEN**

(71) Applicant: Mitsubishi Pencil Co., Ltd., Tokyo 140-8537 (JP)
(72) Inventor: ITOU, Hiroyuki, Tokyo 140-8537 (JP); KAWAKITA, Yoshihiro, Yokohama-shi Kanagawa 221-8550 (JP)
(74) Representative: Cohausz & Florack
(86) International application number: PCT/JP2010/060792
(87) International publication number: WO 2011/158384

(57) **Abstract**

Provided is a novel ink composition for a ballpoint pen such that the ink composition combines the strength of water-based ink for ballpoint pens and oil-based ink for ballpoint pens. Specifically provided is a water-based ink composition for ballpoint pens, wherein an oily phase containing an oily solution obtained by dissolving a dye in an organic solvent is contained, as an oil-in-water emulsion, in an aqueous phase comprising a pigment dispersant.

## Description

### TECHNICAL FIELD

The present invention relates to an ink composition for a water-based ballpoint pen. More specifically, the present invention relates to an ink composition for a water-based ballpoint pen, in which an aqueous phase is comprised of pigment dispersion and a dye dissolved in an oil phase is comprised in an oil-in-water emulsion state in the aqueous phase.

### BACKGROUND ART

The water-based ballpoint pen is characterized in that the ink is less viscous and flows out in a larger amount and a sharp line can be drawn with light writing feel, but the writing feel is disadvantageously accompanied by a scratch feeling. Also, a pigment or a dye is used as the coloring material, and the pigment has an advantage of high weather resistance but can hardly provide a high drawn line density due to its weak coloring power. If a large amount of a pigment is added so as to increase the density, there arises a problem that the dispersion stability is impaired. Furthermore, the pigment is inferior to a dye in the color tone variation. On the other hand, the dye advantageously has high coloring power and wide latitude of color tone but has a problem that the weather resistance is low and when water is attached, bleeding of the drawn line is readily caused.

The oil-based ballpoint pen is advantageous in that because the ink has a high viscosity and flows out in a small amount, the writing is free from a scratch feeling and the drawn line is less likely to blur, but in many cases, the pen requires a heavy writing feel. Also, a dye which can be used as the coloring material has a molecular structure insoluble or hardly soluble in water and therefore, is water-resistant, leading to no occurrence of water-induced bleeding that is seen in the ink using a water-soluble dye.

In recent years, an oil-based ballpoint pen improved in the writing feel by reducing the viscosity of the oil-based ink has been also developed. However, the amount of the low-viscosity oil-based ink flowing out during writing is increased and therefore, the drying property of the drawn line is deteriorated, giving rise to strike though of the ink to the back surface of paper or an ink blobbing.

Japanese Unexamined Patent Publication (Kokai) No. 2004-115611 describes a low-viscosity oil-based ballpoint pen using a W/O organic solvent containing water in an organic solvent. However, this ink has a problem in the storage stability and also, because the most part of the ink composition is an organic solvent, when the outflow amount during writing is increased, strike through is caused.

Kokai No. 2007-327003 describes a W/O emulsion ink composition where a water droplet composed of an aqueous composition having dispersed therein a pigment is dispersed in an oily component by previously incorporating a pigment into an aqueous component and mixing it with an oily component. A ballpoint pen ink improved in the writing feel and the like by using this ink composition is disclosed, but the ink is lacking in stability, for example, is localized resulting from coalescence of water droplets during long-term storage. Also, the amount of the oily component in the ink composition is large and therefore, when the outflow amount during writing is increased as in a water-based ballpoint pen, strike through or deterioration of drying property of the drawn line becomes outstanding.

Kokai No. 55-152768 describes a writing ink erasable with an eraser, where a colored composition prepared by dispersing a pigment in a polymer solution composed of a polymer and a solvent capable of dissolving the polymer is emulsion-dispersed in water. However, because the coloring material is a pigment and the dispersed particle has a very high viscosity, when this ink is used for a ballpoint pen, the writing property is bad, and the dispersed particle is prone to coalescence and sedimentation, giving rise to a problem also in the storage stability.

Kokai No. 2004-323618 describes a multicolor ink for a writing instrument, where an ink composition composed of a water-soluble ink containing a water-soluble dye and an oil-soluble ink containing an oil-soluble dye is shaken at writing to form an unstable emulsion and the written line is short and is irregularly and continuously changed. It is stated that this ink separates into two layers in a standstill state, and the ink is unsuited as a normal ballpoint pen ink.

Japanese Patent Application No. 2008-145150 discloses an ink composition, which is invented by the present inventors, for a water-based ballpoint pen, where best properties of a water-based ballpoint pen and an oil-based ballpoint pen are combined and the property or state of the ink is an oil-in-water emulsion. The aqueous phase realizes a high outflow amount and light writing feel and the oil film of the oily phase prevents blurring of the drawn line or strike through and provides writing feel free from a scratch feeling. The invention described in the description of Japanese Patent Application No. 2008-145150 is certainly an unprecedented ink composition for a water-based ballpoint pen and has an excellent performance, but on the other hand, the emulsion is highly viscous is preferred, and the solvent used therein having a high boiling point is preferred in view of stability, therefore the emulsion itself has low volatility. The ink has a problem that a high emulsion concentration leads to deterioration of drying property of the drawn line and a low concentration gives rise to insufficient density of the drawn line. In addition, there is a problem that the emulsion mainly composed of a dye solution as a coloring material is deficient in the light resistance. In Example 2 of Japanese Patent Application No. 2008-145150, a formulation where carbon black is added is described, but this is not enough to solve those various problems, and more improvements are needed.

### RELATED ART

### PATENT DOCUMENT

Patent Document 1: Japanese Patent Publication (Kokai) No. 2004-115611
Patent Document 2: Japanese Patent Publication (Kokai) No. 2007-327003
Patent Document 3: Japanese Patent Publication (Kokai) No. 55-152768
Patent Document 4: Japanese Patent Publication (Kokai) No. 2004-323618
Patent Document 5: Japanese Patent Application No. 2008-145150

### SUMMARY OF THE INVENTION

### PROBLEMS TO BE SOLVED BY THE INVENTION

As described above, each of a water-based ballpoint pen and an oil-based ballpoint pen has advantages and disadvantages. An object of the present invention is to provide a novel ink composition for a water-based ballpoint pen, where best properties of the both types are combined.

### MEANS TO SOLVE THE PROBLEMS

As a result of intensive studies, the present inventors have found that the above-described object can be attained by combining an oily dye solution as an oil-in-water emulsion with an aqueous phase composed of pigment dispersion.

(1) An ink composition for a water-based ballpoint pen, wherein an oily phase comprising an oily solution obtained by dissolving a dye in an organic solvent is comprised in an oil-in-water emulsion state in an aqueous phase comprised of pigment dispersion.

(2) The ink composition for a water-based ballpoint pen according to (1), wherein a solvent having one or more aromatic rings in the molecular structure accounts for 50% or more on a mass basis of the organic solvent in the oily solution and the ink composition comprises an emulsifier having one or more aromatic rings in the molecular structure.

(3) The ink composition for a water-based ballpoint pen according to (2), wherein the emulsifier comprises at least an aromatic emulsifier having a number of moles of ethylene oxide added of 40 or more.

(4) The ink composition for a water-based ballpoint pen according to any one of (1) to (3), wherein the boiling point of the solvent of said oily solution is 200°C or more.

(5) The ink composition for a water-based ballpoint pen according to any one of (1) to (4), wherein a solvent which has the solubility for water at 25°C of 1% or less on a mass basis and has one or more aromatic rings in the molecular structure accounts for 50% or more on a mass basis of the organic solvent of said oily solution.

(6) The ink composition for a water-based ballpoint pen according to any one of (1) to (5), wherein the average particle diameter of the oil droplet of the oil-in-water emulsion is 200 nm or less.

(7) The ink composition for a water-based ballpoint pen according to any one of (1) to (6), wherein the proportion of the oily phase component in the ink composition is from 1 to 20% on a mass basis.

(8) The ink composition for a water-based ballpoint pen according to any one of (1) to (7), wherein the dispersant comprised in said pigment dispersion is a styrene acrylic resin.

### EFFECTS OF THE INVENTION

The ink composition for a water-based ballpoint pen of the present invention is characterized by containing pigment dispersion in an aqueous phase and containing a dye solution in an oil-in-water emulsion state. Thanks to this configuration, in addition to having both light writing feel that is an advantage of a conventional pigment-type water-based ballpoint pen, and water resistance/weather resistance attributable to the pigment, the oil-in-water emulsion exerts the following operations and effects. That is, writing feel free from a scratch feeling is provided by an oil film of the oily phase and furthermore, use of a dye enables enhancement of the color density and color tone variation with a high degree of freedom and at the same time, affords water resistance. The present invention provides a water-based ballpoint pen ink composition having best properties of both a water-based ballpoint pen ink and an oil-based ballpoint pen ink and at the same time, exhibiting good storage stability.

### MODE FOR CARRYING OUT THE INVENTION

The ink composition of the present invention has a configuration where an aqueous phase is comprised of pigment dispersion and an oily dye solution is contained in an oil-in-water emulsion state in the aqueous phase. The components of the ink composition of the present invention are described in detail below.

The oily phase of the ink composition of the present invention is comprised of an oily solution obtained by dissolving at least a dye as a coloring material in an organic solvent. In view of dissolving a dye, the solvent of the oily solution is preferably a solvent having an aromatic ring in the molecular structure, and any solvent may be used as long as it is a solvent having an aromatic ring. The solvent having an aromatic ring in the molecular structure accounts for preferably 50% or more, most preferably 70% or more, on a mass basis of all solvents of the oily phase solution.

In particular, considering incompatibility with water, good storage stability of the emulsion formed, and high safety as well as capability of dissolving a dye, the solvent is more preferably a solvent having one or more aromatic rings in the molecule, where the solubility of the solvent in water is 1 g/100 g or less at 25°C. If the solubility exceeds 1 g/100 g, the obtained emulsion becomes unstable and phase separation may be caused with aging. In the oily solution, the solvent having one or more aromatic rings in the molecule, where the solubility of the solvent in water is 1 g/100 g or less at 25°C, accounts for preferably 50% or more, most preferably 70% or more, on a mass basis of all solvents.

Also, the solvent which can be used for the oily solution of the present invention is preferably a relatively low-volatile solvent.
The solvent may be comprised of one kind of a solvent selected from the following examples of the solvent or may be comprised of a plurality of kinds of solvents.

Examples of the solvent which can be used for the oily solution of the present invention include benzyl alcohol, ethylene glycol monophenyl ether, ethylene glycol monobenzyl ether, propylene glycol monophenyl ether, diethylene glycol monophenyl ether, phenyl alkylsulfonate, butyl phthalate, ethylhexyl phthalate, tridecyl phthalate, ethylhexyl trimellitate, diethylene glycol dibenzoate, dipropylene glycol dibenzoate, xylene, and toluene. Among these, preferred are solvents having a solubility in water at 25°C of 1 g/100 g or less, such as ethylene glycol monobenzyl ether, propylene glycol monophenyl ether, phenyl alkylsulfonate, ethylhexyl phthalate, tridecyl phthalate, ethylhexyl trimellitate, diethylene glycol dibenzoate, dipropylene glycol dibenzoate, liquid xylene resin, toluene and xylene. Among others, a solvent having solubility in water at 25°C of 0.1 g/100 g or less, such as phenyl alkylsulfonate, ethylhexyl trimellitate, diethylene glycol dibenzoate and dipropylene glycol dibenzoate, or a solvent such as liquid xylene resin, toluene and xylene is most preferred.

In view of working safety when dissolving a dye or from the standpoint of preventing the emulsion from becoming unstable due to increase in the inner pressure at a high temperature, a solvent having a boiling point of 200°C or more is preferred. Examples of the preferred solvent include benzyl alcohol, ethylene glycol monophenyl ether, ethylene glycol monobenzyl ether, propylene glycol monophenyl ether, diethylene glycol monophenyl ether, phenyl alkylsulfonate, butyl phthalate, ethylhexyl phthalate, tridecyl phthalate, ethylhexyl trimellitate, diethylene glycol dibenzoate, and dipropylene glycol dibenzoate.

Also, the oily solution of the present invention may contain an optional auxiliary solvent, in addition to the solvent having an aromatic ring. For example, a solvent selected from alcohols, polyhydric alcohols, glycol ethers, hydrocarbons and esters may be used, but a solvent that is infinitely compatible with water brings about diffusion into an aqueous phase or coalescence of oil droplets and therefore, should not be used in a large amount. It is preferred to use the solvent in an amount of preferably 10% or less based on mass% of all solvents in the oily solution.

As the alcohols, an aliphatic alcohol having a carbon number of 2 or more is preferred, and examples thereof include ethanol, n-propanol, isopropanol, n-butanol, isobutanol, tert-butyl alcohol, 1-pentanol, isoamyl alcohol, sec-amyl alcohol, 3-pentanol, tert-amyl alcohol, n-hexanol, methylamyl alcohol, 2-ethylbutanol, n-heptanol, 2-heptanol, 3-heptanol, n-octanol, 2-octanol, 2-ethylhexanol, 3,5,5-trimethylhexanol, nonanol, n-decanol, undecanol, n-decanol, trimethylnonyl alcohol, tetradecanol, heptadecanol, cyclohexanol, 2-methylcyclohexanol, and other higher alcohols of great variety.

As the polyhydric alcohols, a polyhydric alcohol having two or more carbons and two or more hydroxyl groups in the molecule is preferred, and examples thereof include ethylene glycol, diethylene glycol, 3-methyl-1,3-butanediol, triethylene glycol, dipropylene glycol, 1,3-propanediol, 1,3-butanediol, 1,5-pentanediol, hexylene glycol, and octylene glycol.

Examples of the glycol ethers include methyl isopropyl ether, ethyl ether, ethylpropyl ether, ethylbutyl ether, isopropyl ether, butyl ether, hexyl ether, 2-ethylhexyl ether, ethylene glycol monohexyl ether, ethylene glycol mono-2-ethylbutyl ether, ethylene glycol monomethyl ether, ethylene glycol monoethyl ether, ethylene glycol monobutyl ether, diethylene glycol monomethyl ether, diethylene glycol monoethyl ether, diethylene glycol monobutyl ether, triethylene glycol monobutyl ether, tetraethylene glycol monobutyl ether, 3-methyl-3-methoxy-1-butanol, 3-methoxy-1-butanol, propylene glycol monomethyl ether, propylene glycol monoethyl ether, propylene glycol monopropyl ether, propylene glycol monobutyl ether, propylene glycol tertiary-butyl ether, dipropylene glycol monomethyl ether, dipropylene glycol monoethyl ether, dipropylene glycol monopropyl ether, dipropylene glycol monobutyl ether, tripropylene glycol monomethyl ether, tripropylene glycol monobutyl ether, and tetrapropylene glycol monobutyl ether.

The hydrocarbons include linear hydrocarbons such as hexane, isohexane, heptane, octane, nonane and decane, and cyclic hydrocarbons such as cyclohexane, methylcyclohexane and ethylcyclohexane.

Examples of the esters as the auxiliary solvent include various esters such as propylene glycol methyl ether acetate, propylene glycol diacetate, 3-methyl-3-methoxybutyl acetate, propylene glycol ethyl ether acetate, ethylene glycol ethyl ether acetate, butyl formate, isobutyl formate, isoamyl formate, propyl acetate, butyl acetate, isopropyl acetate, isobutyl acetate, isoamyl acetate, methyl propionate, ethyl propionate, propyl propionate, isobutyl propionate, isoamyl propionate, methyl butyrate, ethyl butyrate, propyl butyrate, methyl isobutyrate, ethyl isobutyrate, propyl isobutyrate, methyl valerate, ethyl valerate, propyl valerate, methyl isovalerate, ethyl isovalerate, propyl isovalerate, methyl trimethylacetate, ethyl trimethylacetate, propyl trimethylacetate, methyl caproate, ethyl caproate, propyl caproate, methyl caprylate, ethyl caprylate, propyl caprylate, methyl laurate, ethyl laurate, methyl oleate, ethyl oleate, triglyceride caprylate, tributylacetate citrate, octyl oxystearate, propylene glycol monoricinolate, methyl 2-hydroxyisobutyrate and 3-methoxybutyl acetate.

Also, a diether or a diester can be used as an auxiliary solvent not having a hydroxyl group in the molecule, and specific examples thereof include ethylene glycol diethyl ether, ethylene glycol dibutyl ether, diethylene glycol diethyl ether, diethylene glycol dibutyl ether, diethylene glycol dimethyl ether, and dipropylene glycol dimethyl ether.

The coloring material in the oily phase of the ink composition of the present invention is a dye. Any of dyes used in a general oil-based ink composition may be used. As the oil-soluble dye according to the present invention, an arbitrary dye selected, for example, from dyes usually used for a dye ink composition, such as direct dye, acidic dye, basic dye, mordant·acidic mordant dye, spirit-soluble dye, azoic dye, sulfide·sulfide vat dye, vat dye, disperse dye, oil-soluble dye, food dye, metal complex salt dye, salt-forming dye and dye obtained by dying a resin with a dye, can be used. Among these, an alcohol-soluble dye, an oil-soluble dye and the like, such as salt-forming dye, which can be readily dissolved in an organic solvent, are preferred in view of solubility and stability of emulsion, and an oil-soluble dye is more preferred.

The blending amount as the lower limit of the dye is preferably 0.3% or more on a mass basis of the entire amount of the ink composition. If the blending amount is less than 0.3%, the coloring power is insufficient. Also, the blending amount as the upper limit is preferably 70% or less on a mass basis of the total amount of the oily solution. If the blending amount exceeds 70%, the dye can hardly dissolve and this is not preferred as an ink composition of a ballpoint pen. The blending amount is preferably from 1 to 3% on a mass basis of the ink composition and at the same time, from 10 to 60% on a mass basis of the oily solution.

The salt-forming dye used in the oil-based ink composition includes Valifast Color (trademark, produced by Orient Chemical Industries Co., Ltd.), Aizen Spiron Dye and Aizen SOT Dye (both trademarks, produced by Hodogaya Chemical Co., Ltd.).

The dye used when dyeing the resin with a dye includes keiko-Colot MPI-500 Series, keiko-Colot MPI-500C Series, and keiko-Colot NKS-1000 Series (all trademarks, produced by Nippon Keiko Kagaku K.K.).

As for the coloring material in the oily phase, a small amount of a pigment can be used in combination with the dye as long as the stability of the emulsion can be maintained. In the case of using a pigment, the amount of the pigment is preferably 10% or less on a mass basis of the oily solution. If the amount exceeds 10%, the stability of the emulsion is impaired.

The pigment which can be used in combination with the dye in the oily phase include an inorganic pigment such as carbon black and titanium oxide, and various organic pigments such as phthalocyanine-based pigment, azo-based pigment, diketopyrrolopyrrole-based pigment, anthraquinone-based pigment, perylene-based pigment, isoindolinone-based pigment and quinacridone-based pigment.

In the oily solution for preparing the ink composition of the present invention, a resin can be used so as to adjust the viscosity. The viscosity of the oily solution is, in a state not containing an emulsifier, preferably from 500 to 1,000,000 mPa·s at 25°C and a shear rate of 3.83/sec. If the viscosity is less than 500 mPa·s, writing is accompanied by a scratch feeling and the performance as an oil-based ink after making an oil-in-water emulsion can be hardly brought out. Furthermore, this range is not preferred for stability of the emulsion. If the viscosity exceeds 1,000,000 mPa·s, the writing feel becomes heavy and this range is undesirable as an ink composition of a ballpoint pen. The viscosity is more preferably from 3,000 to 500,000 mPa·s at 25°C and a shear rate of 3.83/sec.

Specific examples of the resin which can be used for the ink composition of the present invention include natural and synthetic resins such as ketone resin, sulfonamide resin, maleic acid resin, terpene resin, terpene phenol resin, ester gum, xylene resin, alkyd resin, phenol resin, rosin, polyvinylpyrrolidone, polyvinylbutyral, polyvinyl alcohol, acrylic resin, melamine-based resin and cellulose-based resin, and one of these resins or two or more thereof may be used.

The amount of the dye and other additives in the oily solution is, in terms of a solid content concentration, preferably from 3 to 70% on a mass base of the entire oily solution. If the solid content concentration is less than 3%, sufficient viscosity may not be imparted, whereas if the solid content concentration exceeds 70%, the dye can be hardly dissolved and this range is undesirable as an ink composition of a ballpoint pen. The solid content concentration is more preferably from 10 to 60%.

The aqueous phase of the ink composition of the present invention is comprised of pigment dispersion. For example, the pigment dispersion is pigment dispersion using ion-exchanged water or purified water. As the pigment, an inorganic pigment such as carbon black and titanium oxide, and various organic pigments such as phthalocyanine-based pigment, azo-based pigment, diketopyrrolopyrrole-based pigment, anthraquinone-based pigment, perylene-based pigment, isoindolinone-based pigment and quinacridone-based pigment, can be used.

Examples thereof include C.I. Pigment Black 1, 7, C.I. Pigment Yellow 1, 2, 3, 12, 13, 14, 16, 17, 20, 24,34, 35, 42, 53, 55, 65, 73, 74, 75, 81, 83, 86, 93, 94, 95, 97, 98, 99, 100, 101, 104, 108, 109, 110, 114, 117, 120, 125, 128, 129, 137, 138, 139, 147, 148, 150, 151, 153, 154, 155, 166, 167, 168, 173C, 174, 180, 185, etc., C.I. Pigment Red 1, 2, 3, 5, 7, 8, 9, 10, 12, 16, 17, 19, 22, 38, 41, 43, 48, 48:2, 48:3, 49, 50:1, 52, 53, 53:1, 57, 57:1, 58:2, 60, 63:1, 63:2, 64:1, 86, 88, 90, 9, 112, 122, 123, 127, 146, 149, 166, 168, 170, 175, 176, 177, 179, 180, 181, 184, 185, 189, 190, 192, 194, 198, 202, 206, 207, 209, 215, 216, 217, 220, 223, 224, 226, 227, 228, 238, 240, 245, 254, 225, etc., C.I. Pigment Blue 1, 2, 3, 15:1, 15:2, 15:3, 15:4, 15:6, 16, 17, 22, 25, 60, 64, 66, etc., C.I. Pigment Orange 5, 10, 13, 16, 36, 40, 43, 48, 49, 51, 55, 59, 61, 71, etc., C.I. Pigment Violet 1, 3, 5:1, 16, 19, 23, 29, 30, 31, 33, 36, 37, 38, 40, 42, 50, etc., C.I. Pigment Green 7, 10, 36, etc., and C.I. Pigment Brown 23, 25, 26, etc.

The color of the pigment dispersed in the aqueous phase and the color of the dye dissolved in the oily phase may be the same or different. In the case of using a dye of the same color as the color of the pigment, thanks to the dye, the color of the ink becomes bright and at the same time, the color density is enhanced. In the case of using a dye of a different color from the color of the pigment, color tone variation with a high degree of freedom is obtained.

As the dispersant used to obtain the pigment dispersion, commercially available various dispersants can be used, and the dispersant is not particularly limited, but in view of compatibility with the oil-in-water emulsion existing together and storage stability, a polymer resin-based dispersant is preferred, and a material different from the material used as an emulsifier for the emulsion formation is preferred. For example, a styrene acrylic resin or a polyoxyethylene-based dispersant can be used. The dispersant is more preferably a styrene acrylic resin that is a high-molecular polymer.

The amount of the pigment used here is from 3 to 15%, preferably from 5 to 10%, based on the entire mass of the ink composition. If the amount of the pigment is 3% or less, the light resistance as a main component of the coloring material becomes bad and the dense feel of the drawn line lacks. If the amount of the pigment is 15% or more, this is undesirable in view of dispersion stability of the pigment. The amount of the dispersant used is preferably from 20 to 100% based on the total amount of the pigment in the pigment dispersion.

The method for dispersing the pigment in the aqueous phase includes, for example, a method of uniformly mixing respective components by a mixing stirrer, and a method using a disperser such as ball mill, bead mill, roll mill, homomixer, Disper, ultrasonic disperser and high-pressure homogenizer.

Also, the aqueous phase can contain an additive for the purpose of preventing the ink from freezing at a low temperature or preventing drying of the ink at the pen tip. Specific examples of the additive include glycols such as ethylene glycol, diethylene glycol, triethylene glycol, propylene glycol, polyethylene glycol, 1,3-butylene glycol, thiodiethylene glycol and glycerin, and ethers such as ethylene glycol monomethyl ether and diethylene glycol monomethyl ether, and one of these may be used alone or a mixture thereof may be used. The amount of the additive used is from 0 to 50%, preferably from 0 to 30%, on a mass basis of the aqueous phase. If the additive is added in an amount of 50% or more, the stability of the emulsion obtained may be impaired.

The aqueous phase contains an emulsifier so as to form a stable emulsion when mixed with the above-described oily solution. The emulsifier for forming a long-term stable emulsion by the mixing with the main solvent of the oily solution according to the present invention is an emulsifier having one or more aromatic rings in the molecular structure. The emulsifier having one or more aromatic rings in the molecular structure is considered to form a long-term stable emulsion, because the aromatic ring that is a lipophilic group has high affinity for the dye solution of the oily phase.

The aromatic emulsifier which can be used for the ink composition of the present invention is not particularly limited as long as it has one or more aromatic rings. The emulsifier can be usually changed in its property by the number of moles of ethylene oxide (EO) added. In relation to the main solvent used for the oily solution, an emulsifier having a number of moles of ethylene oxide added of 40 mol or more is preferred. Because, thanks to the long-chain ethylene oxide chain, coalescence of particles is suppressed.

The above-described emulsifier having a number of moles of ethylene oxide added of 40 mol or more and an emulsifier having a number of moles of ethylene oxide added of 3 to 15 mol, which exhibits a strong orientation toward the oily phase, can be used in combination. Because, the combination of an emulsifier exhibiting a strong orientation toward the oily phase and an emulsifier exhibiting a strong orientation toward the aqueous phase is considered to increase the micelle concentration at the interface and enhance the stability of the emulsion.

As for the HLB value (hydrophilic-lipophilic balance value), in the case of a nonionic surfactant, one or more emulsifiers having at least an HLB value of 15 or more are preferably used. Because, even when the number of moles of ethylene oxide added is large, if the HLB value is low, the emulsifier is excessively taken into the oily phase side.

The emulsifier containing 40 mol or more of ethylene oxide includes a polycyclic phenyl-type nonionic surfactant such as polyoxyethylene distyrenated phenyl ether, polyoxyethylene monostyrenated phenyl ether and polyoxyethylene cumyl phenyl ether, where 40 mol or more of an ethylene oxide chain is added, and an ionic surfactant such as sulfate of the compound above. The number of moles of ethylene oxide added is preferably from 40 to 200 mol. In the case of an emulsifier where 200 mol or more is added, an extreme rise in viscosity is brought about and this is sometimes unsuited for use.

Examples of the emulsifier having a number of moles of ethylene oxide added of 3 to 15 include a polycyclic phenyl-type nonionic surfactant such as polyoxyethylene distyrenated phenyl ether, polyoxyethylene monostyrenated phenyl ether and polyoxyethylene cumyl phenyl ether, where from 3 to 15 mol of an ethylene oxide chain is added, an ionic surfactant such as sulfate of the compound above, and an alkyl phenol-type nonionic surfactant such as polyoxyethylene alkylphenyl ether.

As the emulsifier, in addition to the surfactant having an aromatic ring within the molecule, an optional emulsifier having other structure may be additionally added. Examples thereof include a linear hydrocarbon-type nonionic surfactant such as polyoxyethylene hydrogenated caster oil and polyoxyethylene alkyl (C10-C18) ester. The amount of the emulsifier is preferably from 5 to 150%, most preferably from 10 to 100%, on a mass basis of the oily solution.

Other than the pigment dispersion and the emulsifier, the aqueous phase may contain various additives usually used for a water-based ballpoint pen, such as rust inhibitor, antiseptic, pH adjusting agent, lubricant, moisturizer and thickener (e.g., resin, natural polysaccharide).

The proportion of the oily phase component in the oil-in-water ink composition for a water-based ballpoint pen of the present invention is from 1 to 20%, preferably from 3 to 15%, more preferably from 5 to 10%, on a mass basis. If the proportion of the oily phase component is less than 1%, enhancement of color density and satisfactory performance in terms of writing property are not obtained, and the ballpoint pen is no better than an ordinary water-based ballpoint pen. Also, if the proportion of the oily phase component exceeds 20%, the emulsion may become unstable due to interaction with the pigment dispersion and moreover, the increase in the oil content may adversely affect the drying property of the drawn line.

The average particle diameter of the emulsion is preferably 200 nm or less, more preferably 150 nm or less. The average particle diameter is set to be 200 nm or less so as to prevent particle sedimentation or coalescence due to collision of particles with each other. The particle diameter can be adjusted by the control according to the later-described emulsification method, and pulverization can be also attained using a mechanical shear force from an emulsifying machine such as high-pressure homogenizer.

As for the emulsification method of the oil-in-water emulsion of the present invention, various emulsification methods known in conventional techniques, such as phase transfer emulsification method, D phase emulsification method, PIT emulsification method and mechanical emulsification method, can be used. For example, in the phase transfer emulsification method, the oil-in-water emulsion of the present invention is produced through the following steps:
a) a step of dissolving solid contents in an organic solvent by stirring an oily solution component containing at least a dye as a coloring material,
b) a step of adding an emulsifier to an aqueous component and dissolving it with stirring,
c) a step of gradually adding the aqueous component obtained in step b while stirring the oily solution obtained in step a to obtain a water-in-oil emulsion, and
d) a step of further adding an aqueous component with stirring and through phase transition, obtaining an oil-in-water emulsion.

In the step of preparing an aqueous phase containing pigment dispersion, there may be employed a conventionally known method for an aqueous pigment ink, for example, a method including:
a) a step of stirring a pigment, a dispersant, a solvent and a pH adjusting agent by means of a stirrer for 3 hours,
b) a step of dispersing the mixture by a sand mill for 5 hours,
c) a step of removing coarse particles of the pigment liquid dispersion obtained above by a centrifugal separator, and
d) a step of diluting the pigment liquid dispersion above and adding other components.

The oil-in-water emulsion and the aqueous phase containing pigment dispersion, which are prepared as above, are stirred/mixed. The stirring/mixing may use, for example, a method of uniformly mixing respective components by a mixing stirrer, or a method of dispersing/mixing respective components by using a disperser such as ball mill, bead mill, roll mill, homomixer, Disper, ultrasonic disperser and high-pressure homogenizer. At this time, the oily phase component and the aqueous phase component may be simultaneously stirred/mixed or dispersed/mixed, or respective components may be sequentially stirred/mixed or dispersed/mixed.

Incidentally, a previously prepared pigment dispersion may be used as the aqueous component at the production of an oil-in-water emulsion, but phase transition in phase transition emulsification or the like may adversely affect the pigment dispersion system and therefore, it is preferred to separately perform the process of producing an oil-in-water emulsion and the process of dispersing the pigment.

As to the viscous property of the ink composition for a water-based ballpoint pen of the present invention, the viscosity at 25°C and a shear rate of 380/sec is preferably from 1 to 100 mPa·s, more preferably from 5 to 50 mPa·s. If the viscosity is 100 mPa·s or more, the viscous property of the ink is increased, as a result, the followability of the ink in an ink refill is disadvantageously impaired.

### EXAMPLES

Preferred embodiments of the present invention and excellent effects thereof are specifically described below by referring to most representative Examples. In the following, parts is parts by mass in all occurrences, and % is mass% in all occurrences.

With respect to Examples 1 to 18, an ink composition was prepared as follows.
First, the components of the oily solution shown in Table 1 were heated to a temperature of 50 to 60°C with stirring to completely dissolve the components. In the Table, Viscosity of Oily Solution is a value of this solution. Separately, the emulsifier shown in Table 2 was dissolved in purified water with stirring to prepare an aqueous emulsifier solution. Here, in the case of blending an emulsifier that exhibits a strong orientation toward the oily phase, the emulsifier may be added to the oily solution and stirred at an ordinary temperature.

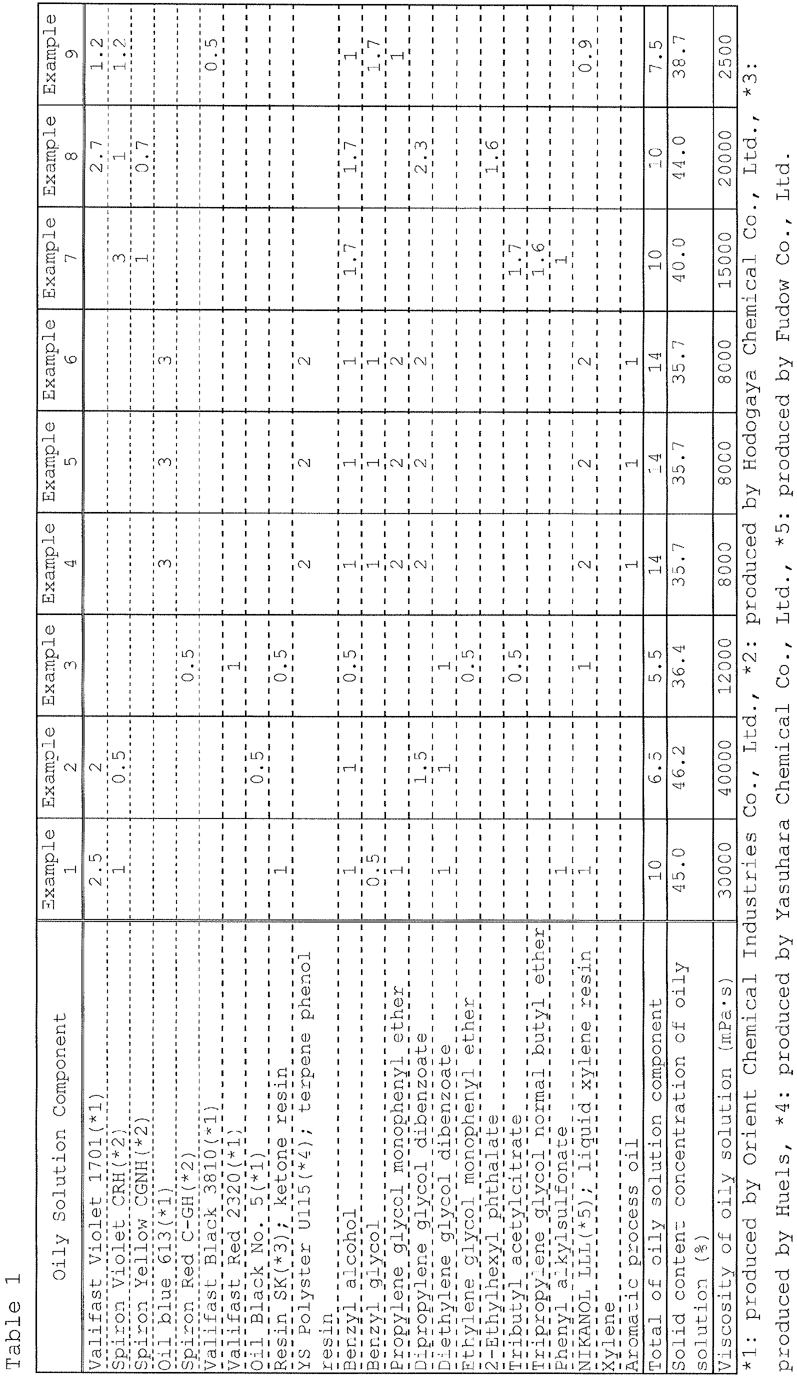

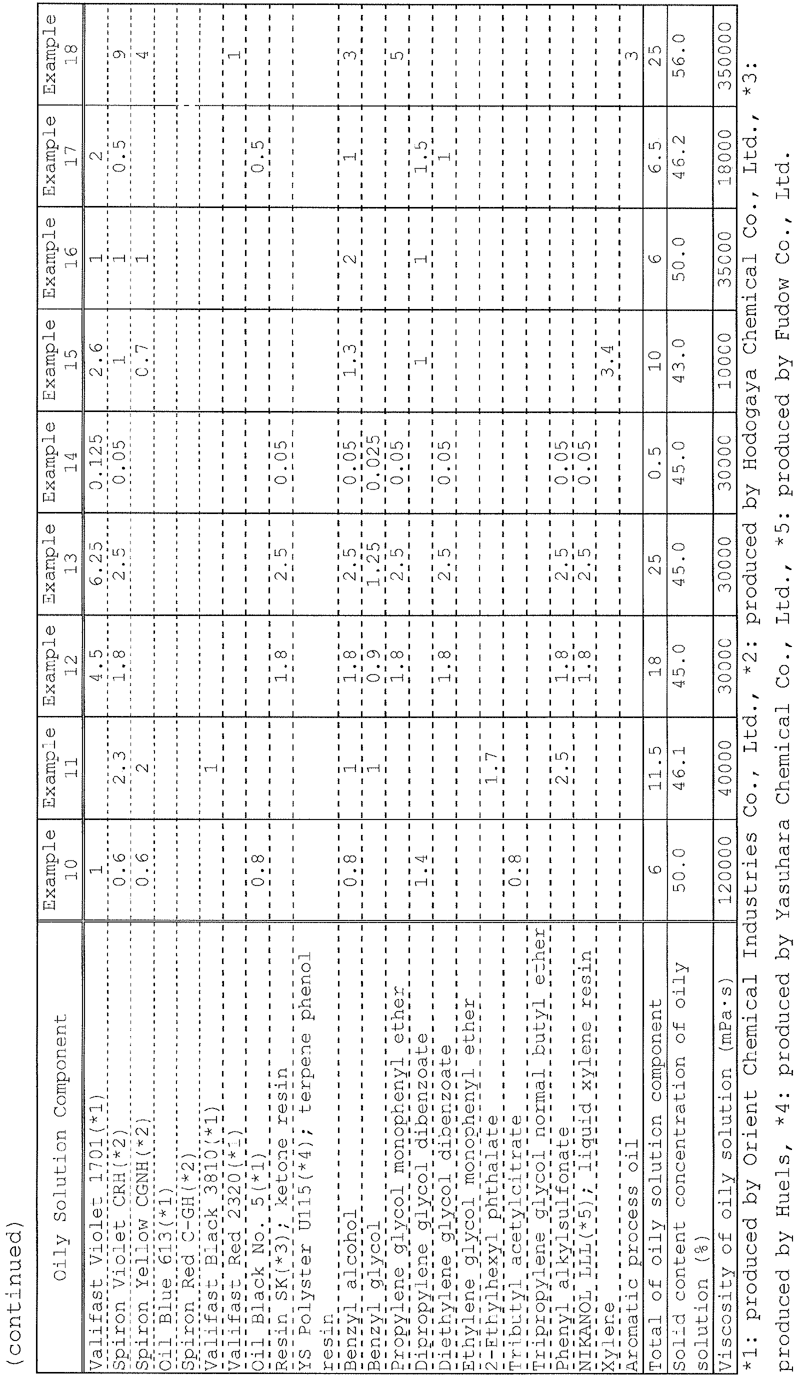

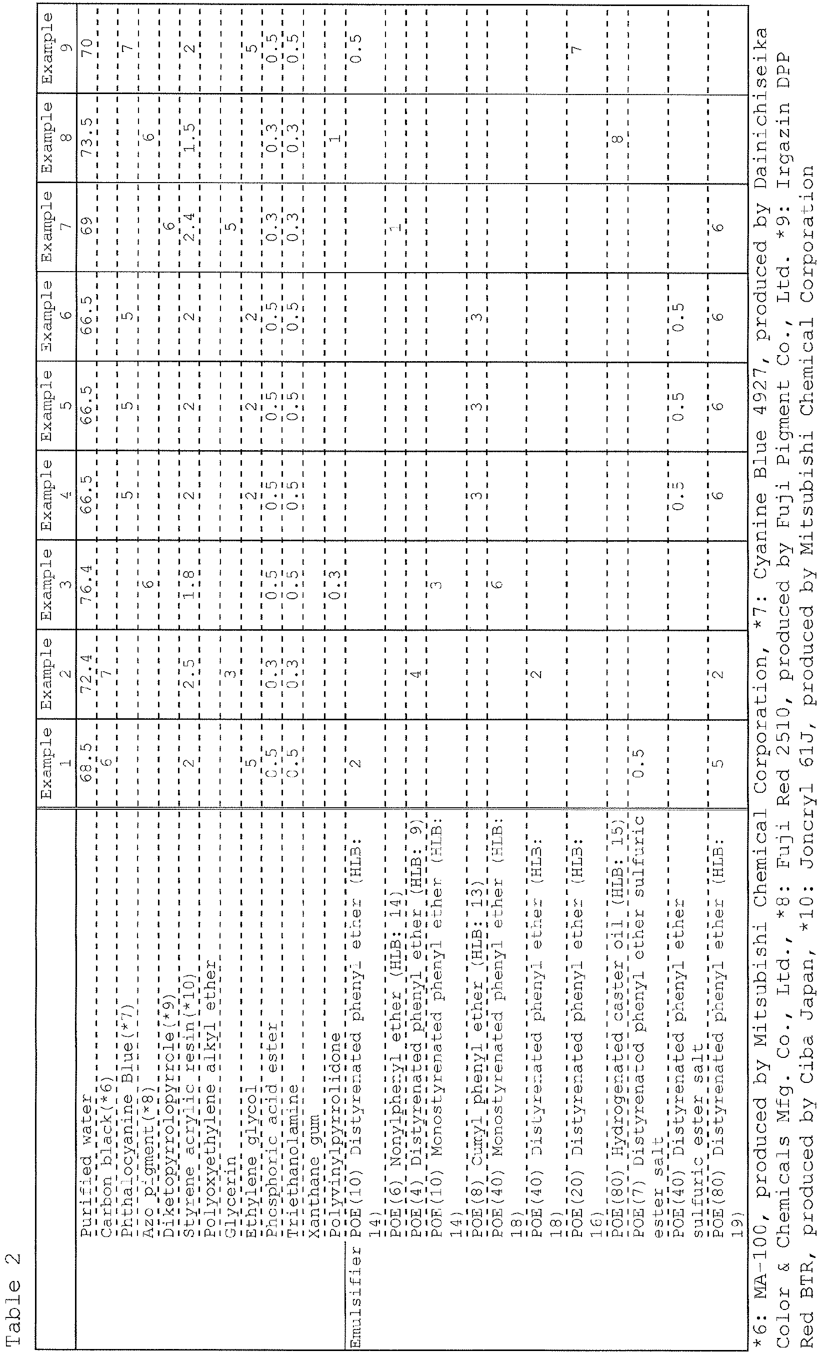

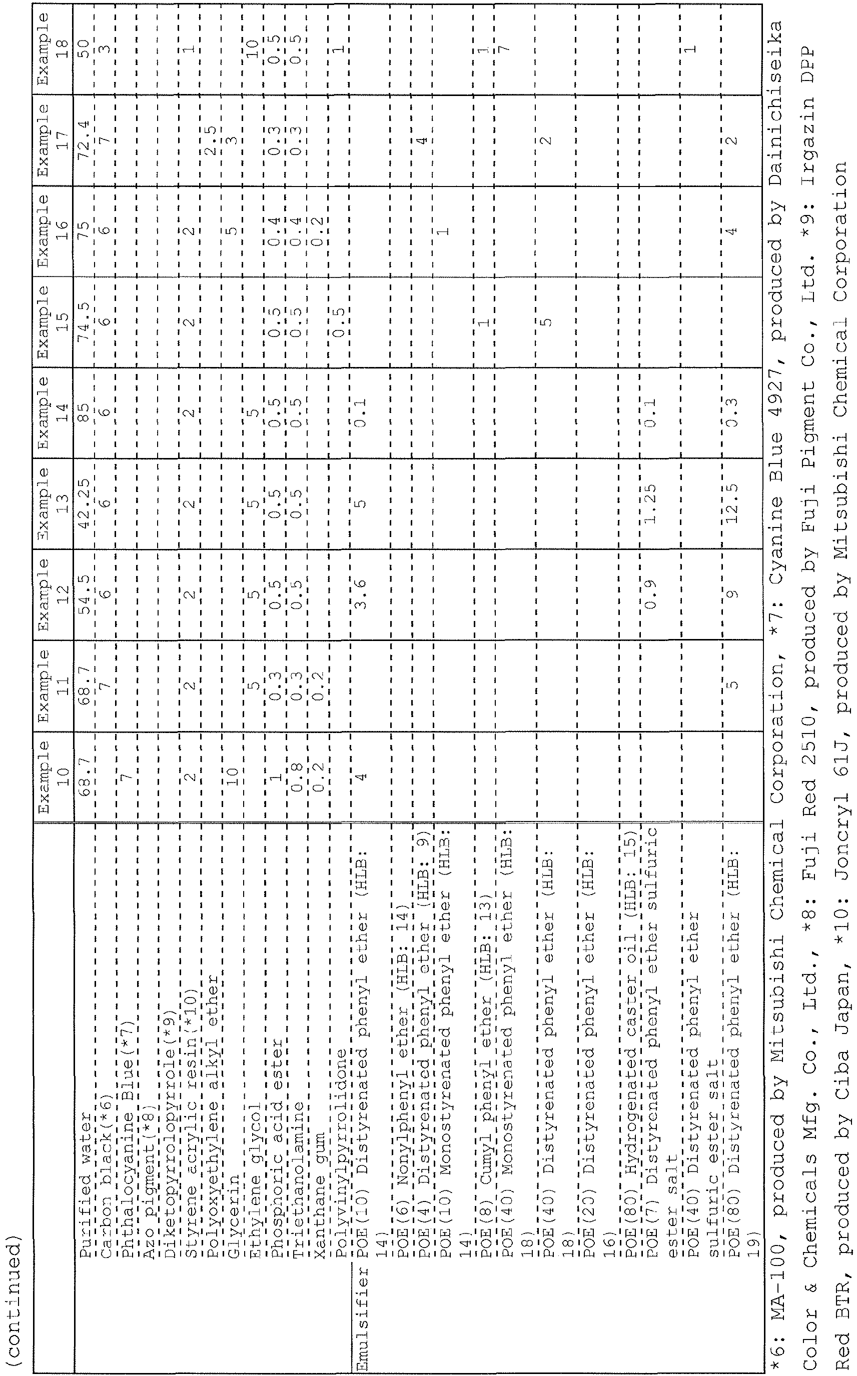

Next, the aqueous emulsifier solution was gradually added to the oily solution with stirring to cause a phase transition from w/o to o/w and thereby obtain an oil-in-water emulsion. Thereafter, as concerns Examples 1 to 4, 6 to 9 and 11 to 18 and Comparative Example 4, an emulsification treatment was performed using a commercially available high-pressure homogenizer until reaching the predetermined average particle diameter. As concerns Examples 5 and 10, the treatment in a high-pressure homogenizer was not performed.

The average particle diameter was measured using a particle size analyzer, N4Plus (manufactured by COULTER). In the measurement, the sample was diluted with water until reaching the recommended concentration of N4Plus, and the particle diameter was measured under the temperature condition of 25°C. Here, the term "average particle diameter" as used in the description of the present invention means a median diameter.

In accordance with the above-described steps, pigment dispersion having a pigment concentration of 20% was separately prepared.
The prepared pigment dispersion was subjected to dilution and addition of other components of step d) so as to finally obtain an ink containing the components in amounts shown in Table 2. At this time, the amount of each component used in the aqueous emulsifier solution was reduced and thereby adjusted.

The oil-in-water emulsion and the pigment dispersion were mixed/stirred by means of Disper and as concerns Examples 10, 11 and 16 and Comparative Example 4, a thickener component was finally dissolved with stirring to obtain the ink composition of the present invention.

In the measurement of viscosity of the ink, a rheometer, RheoStress 600, manufactured by HAAKE was used. A conical cone having a diameter of 20 mm and a tilt angle of 1° was used. The measurement conditions were 25°C and a shear rate of 380/sec, and a numerical value stabilized after measurement for 30 seconds was taken as the viscosity.

Each of the compositions produced in Examples 1 to 18 was filled in a refill, UMR-07, manufactured by Mitsubishi Pencil Co., Ltd. and after incorporation into a barrel, subjected to the following evaluations.

As Comparative Examples 1 to 4, ink compositions shown in Table 3 were prepared. Here, Comparative Example 4 is an ink composition of Example 1 of Japanese Patent Application No. 2008-145150 previously filed by the applicant of the present invention. The ink was filled in a refill, SA-07N, manufactured by Mitsubishi Pencil Co., Ltd. in Comparative Example 1, filled in a refill, UMR-07, manufactured by Mitsubishi Pencil Co., Ltd. in Comparative Examples 2 and 4, or filled in a barrel, UB 157, manufactured by Mitsubishi Pencil Co., Ltd. in Comparative Example 3, and then evaluated.

**Table 3**

| Ink Composition of Comparative Example | | Comparative Example 1 | Comparative Example 2 | Comparative Example 3 | Comparative Example 4 |
|---|---|---|---|---|---|
| | Valifast Black 3810(*1) | 10 | | | |
| | Valifast Violet 1701(*1) | 10 | | | |
| O | Spiron Violet CRH(*2) | 7 | | | 5 |
| O | Oil Black No. 5(*1) | | | | 2 |
| O | Spiron Yellow C-GNH(*2) | 5 | | | 3 |
| | Polyvinylpyrrolidone | 0.5 | | | |
| | Resin SK(*4); ketone resin | 7 | | | |
| O | NIKANOL HP120(*3); xylene resin | | | | 2 |
| O | Benzyl alcohol | 20 | | | 3 |
| | Phenyl glycol | 36.5 | | | |
| O | Dipropylene glycol dibenzoate | | | | 15 |
| | Oleic acid | 3 | | | |
| | NYMEEN L-202(*5); POE | 1 | | | |
| | Carbon black | | 7 | 7 | |
| | Styrene acrylic resin | | 2 | 2 | |
| | Phosphoric acid ester | | 0.5 | 0.5 | |
| | Triethanolamine | | 0.5 | 0.5 | |
| | Benzotriazole | | 0.3 | 0.3 | |
| W | Glycerin | | | | 10 |
| | Ethylene glycol | | | 20 | |
| | Propylene glycol | | 15 | | |
| | Diethylene glycol | | 10 | | |
| E | POE(10) Distyrenated phenyl ether (HLB: 14) | | | | |
| E | POE(80) Distyrenated phenyl ether (HLB: 19) | | | | 9 |
| W | Purified water | | 64.2 | 69.7 | |
| W | Xanthane gum | | 0.5 | | 0.4 |
| Total | | 100 | 100 | 100 | 100 |

| | | | | | |
|---|---|---|---|---|---|
| *1: produced by Orient Chemical Industries Co., Ltd., *2: produced by Hodogaya Chemical Co., Ltd., *3: Fudow Co., Ltd., *4: produced by Huels, *5: produced by NOF Corporation Note) In Comparative Example 4, the ink composition was prepared in accordance with Example 1 by using O: oily components, W: aqueous phase components, and E: emulsifiers. | | | | | |

### <Evaluation>

### (a) Sedimentation Resistance Test

The refill placed by arranging the pen tip to face the centrifugal direction was centrifuged for 5 hours under the conditions of a rotation radius of 20 cm and a rotation speed of 2,000 rpm (about 900 G) and after writing a circle of about 2 cm in diameter on writing paper, the drawn line density was compared with that before the centrifugal treatment.
AA: No difference from initial density.
A: Slightly thick drawn line but no problem in writing.
B: Clearly recognizable thick drawn line but writing is possible.
C: Thick drawn line, conspicuous starving on writing, and unusable.
D: Writing is impossible.

### (b) Test of Lightness of Writing Feel

Five rounds of circles were written on writing paper, and the lightness of writing feel was judged as follows.
AA: Very light
A: Light
B: Normal
C: Heavy
D: Unusable

### (c) Scratch Feeling Test

The scratch feeling in writing at the test of lightness of writing feel in (a) was judged as follows.
AA: Not annoying at all
A: Slightly annoying but no problem
B: Slightly annoying
C: Fairly annoying
D: Annoying

### (d) Water Resistance Test

A drawn line written on writing paper was wetted with water, and the condition after 1 minute was observed.
AA: Absolutely no change in the drawn line.
A: Slight blurring of the drawn line is observed but no problem.
B: The drawn line is conspicuously blurred but can be discriminated.
D: Difficult of discrimination.

### (e) Light Resistance Test

A drawn line written on writing paper was exposed to sunlight for 12 hours, and the degree of discoloring was judged.
AA: Absolutely no discoloring.
A: Slightly discolored but the line is clearly visible.
B: The remaining drawn line can be confirmed.
D: Not visible at all.

### (f) Test of Density of Drawn Line

A drawn line written on writing paper was visually compared with a drawn line written using a water-based ink or a gel ink of Comparative Examples.
AA: Denser than Comparative Sample.
A: Equal to Comparative Sample.
B: Slightly inferior to Comparative Sample.
D: Inferior to Comparative Sample.

### (g) Test of Drying Property of Drawn Line

A drawn line written on writing paper was, after 10 seconds, abraded with a plastic strip, and the stretching degree and dirt of the drawn line were confirmed.
AA: Absolutely no stretching, and the drawn line is not dirty.
A: Almost no stretching, and the drawn line is not dirty.
B: The drawn line is slightly stretched.
D: The drawn line is dirty.

### (f) Storage Stability Test

After a pen body is left standing for 3 months under the condition of 50°C, writing property was confirmed.
AA: No change from initial stage.
A: Slight change compared with initial stage, but no problem in writing.
B: Deterioration of drawn line is observed, but writing is possible.
C: Deterioration of drawn line is conspicuous.
D: Writing is impossible.

The results of the tests above are shown in Tables 4 to 6. It is seen from these results that the ink composition of the present invention exhibits excellent effects as compared with the ink of Comparative Examples (oil-based ink, gel ink, water-based ink, the invention previously filed by the applicant of the present invention).

**Table 4**

| Evaluation | Example 1 | Example 2 | Example 3 | Example 4 | Example 5 | Example 6 | Example 7 | Example 8 | Example 9 |
|---|---|---|---|---|---|---|---|---|---|
| Ink viscosity (mPa·s) | 30 | 15 | 10 | 90 | 90 | 90 | 30 | 35 | 10 |
| Emulsion: average particle diameter (nm) | 80 | 100 | 120 | 110 | 250 | 170 | 140 | 160 | 180 |
| Sedimentation resistance | AA | AA | AA | AA | B | A | AA | A | A |
| Lightness of writing feel | AA | AA | AA | AA | AA | AA | AA | AA | AA |
| Scratch feeling | AA | AA | AA | AA | AA | AA | AA | AA | A |
| Water resistance | AA | AA | AA | AA | AA | AA | AA | AA | AA |
| Light resistance | AA | AA | AA | AA | AA | AA | AA | AA | AA |
| Density of drawn line | AA | AA | AA | AA | AA | AA | AA | AA | AA |
| Drying property of drawn line | AA | AA | AA | AA | AA | AA | AA | AA | AA |
| Storage stability | AA | AA | AA | AA | A | AA | B | B | B |

**Table 5**

| Evaluation | Example 10 | Example 11 | Example 12 | Example 13 | Example 14 | Example 15 | Example 16 | Example 17 | Example 18 |
|---|---|---|---|---|---|---|---|---|---|
| Ink viscosity (mPa·s) | 45 | 50 | 300 | 900 | 5 | 25 | 8 | 15 | 700 |
| Emulsion: average particle diameter (nm) | 220 | 170 | 80 | 80 | 80 | 130 | 100 | 110 | 100 |
| Sedimentation resistance | B | A | AA | AA | AA | AA | AA | AA | AA |
| Lightness of writing feel | AA | AA | AA | AA | AA | AA | AA | AA | AA |
| Scratch feeling | AA | AA | AA | AA | AA | AA | AA | AA | AA |
| Water resistance | AA | AA | AA | AA | AA | AA | AA | AA | A |
| Light resistance | AA | AA | AA | AA | AA | AA | AA | AA | A |
| Density of drawn line | AA | AA | AA | AA | B | A | A | AA | A |
| Drying property of drawn line | AA | AA | A | B | AA | AA | AA | AA | B |
| Storage stability | B | A | A | B | AA | B | B | A | AA |

**Table 6**

| Evaluation | Comparative Example 1 | Comparative Example 2 | Comparative Example 3 | Comparative Example 4 |
|---|---|---|---|---|
| Ink viscosity (mPa·s) | 6000 | 50 | 5 | 1200 |
| Emulsion: average particle diameter (nm) | - | - | - | 100 |
| Sedimentation resistance | - | - | - | AA |
| Lightness of writing feel | B | A | AA | AA |
| Scratch feeling | AA | C | C | AA |
| Water resistance | A | AA | AA | A |
| Light resistance Light resistance | C | AA | AA | C |
| Density of drawn line | C | A | A | A |
| Drying property of drawn line | A | B | A | B |
| Storage stability | AA | AA | AA | AA |

## Claims

1. An ink composition for a water-based ballpoint pen, wherein an oily phase comprising an oily solution obtained by dissolving a dye in an organic solvent is comprised in an oil-in-water emulsion state in an aqueous phase comprised of pigment dispersion.

2. The ink composition for a water-based ballpoint pen according to claim 1, wherein a solvent having one or more aromatic rings in the molecular structure accounts for 50% or more on a mass basis of the organic solvent in said oily solution and said ink composition comprises an emulsifier having one or more aromatic rings in the molecular structure.

3. The ink composition for a water-based ballpoint pen according to claim 2, wherein said emulsifier comprises at least an aromatic emulsifier having a number of moles of ethylene oxide added of 40 or more.

4. The ink composition for a water-based ballpoint pen according to any one of claims 1 to 3, wherein the boiling point of the solvent of said oily solution is 200°C or more.

5. The ink composition for a water-based ballpoint pen according to any one of claims 1 to 4, wherein a solvent which has the solubility for water at 25°C of 1% or less on a mass basis and has one or more aromatic rings in the molecular structure accounts for 50% or more on a mass basis of the organic solvent of said oily solution.

6. The ink composition for a water-based ballpoint pen according to any one of claims 1 to 5, wherein the average particle diameter of the oil droplet of said oil-in-water emulsion is 200 nm or less.

7. The ink composition for a water-based ballpoint pen according to any one of claims 1 to 6, wherein the proportion of the oily phase component in the ink composition is from 1 to 20% on a mass basis.

8. The ink composition for a water-based ballpoint pen according to any one of claims 1 to 7, wherein the dispersant comprised in said pigment dispersion is a styrene acrylic resin.
